# EUROPEAN PATENT SPECIFICATION

(11) **EP 3 064 821 B1**
(45) Date of publication and mention of the grant of the patent: **12.02.2020**
(21) Application number: 15826892.0
(22) Date of filing: 20.05.2015
(51) Int. Cl.: F16L 37/092

(54) **DEVICE FOR COUPLING BETWEEN PIPES**
VORRICHTUNG ZUR KOPPLUNG ZWISCHEN ROHREN
DISPOSITIF D'ACCOUPLEMENT DE TUYAUX

(30) Priority: 31.07.2014 ES 201431168
(43) Date of publication of application: 07.09.2016
(73) Proprietor: Jimten, S.A., 03114 Bacarot Alicante (ES)
(72) Inventor: PÉREZ SALAS, Juan José, 03114 Bacarot (Alicante) (ES); VARELA GARRIDO, Iván, 03114 Bacarot (Alicante) (ES); ALACID GARCIA, Jose, 03114 Bacarot (Alicante) (ES)
(74) Representative: Capitán García, Maria Nuria
(86) International application number: PCT/ES2015/070395
(87) International publication number: WO 2016/016490

(56) References cited:
- EP-A2- 0 863 356
- WO-A1-01/55631
- WO-A1-2006/135227
- WO-A1-2007/004861
- WO-A1-2010/047573
- ES-T3- 2 296 883
- ES-U- 1 069 660
- GB-A- 2 431 210
- US-A- 4 900 068

## Description

### TECHNICAL FIELD OF THE INVENTION

This invention relates to a device that useful for coupling two pipes, of the type comprising a connector that has a locknut.

### BACKGROUND OF THE INVENTION

Several pipe coupling devices are known, for example, those disclosed in patent documents ES 2296883 and GB 2431210, published on 20 November 2002 and 18 April 2007 respectively.

These devices generally comprise a connector and a locknut, where a first pipe to be connected is coupled to the outside of one of the ends of the connector, and the other end of the connector comprises an inner cavity that houses a second pipe to be connected. Similarly, the inner cavity houses a sealing gasket and a locking piece that when the locknut is screwed on the outside of the connector, some inner nerves with edges on said locking piece tighten on the wall of the pipe that is housed inside the connector, that is, the second pipe to be connected; according to such documents, they seek to provide a sealed connection that also prevents decoupling of the pipes.

Other example of pipe coupling device is shown in patent document WO 2010/047573, published on 29 April 2010, which comprises a body providing a tubular conduit enabling fluid flow therethrough from one end to the other. Each end is provided with an inner tubular portion into which a pipe end may be inserted. The body has external threading and an outer tubular portion having a diameter larger than the inner tubular portion wherein an annular surface transiting between said inner and outer tubular portions is provided. A gasket ring having a diameter suitable to fit around the pipe end is provided seated at the annular surface. A clinching sleeve is further provided comprising a ring portion at one end having a diameter disposable within the outer tubular portion of the body and providing an abutment surface against the gasket ring upon being seated. A plurality of clinching flaps extends from the other end of the ring portion wherein each of the clinching flaps' inner surface is provided with gripping means and distributed to encircle a pipe end. A coupling nut is also provided having an inner opening at one end provided with internal threading complementary to said body's external threading, and an outer opening at the other end sufficient for the pipe end to be inserted therethrough.

The patent document WO 01/55631, published on 2 August 2010, shows a connecting device for sealing connection between two tube ends, two opposite symmetrical portions for engaging the respective tube ends, each of the portions including catching means for retaining the tube in the connection, and means for sealing said connection, said catching means of each portion comprising a truncated chamber provided in each portion, a longitudinal rib projecting into the truncated chamber and a slotted ring whereof the ends are arranged on either side of the longitudinal rib, said ring being provided with an internal thread, so as to cause the tube to be locked by any traction on said tube in a direction opposite to its engagement direction. The ring is arranged free in the truncated chamber and elastically deformable, the internal diameter of the ring being smaller than the external diameter of tube when it is not in a stressed or deformed state, so as to be elastically deformed and grip the tube when said tube is inserted.

The patent document US 4900068, published on 13 February 1990, shows a liquid tight connector adapted to connect a non-metallic conduit in liquid tight engagement to a housing, said liquid tight connector including a body, said body including an end portion and a ferrule, said end portion and ferrule including an opening therethrough forming a passage, said end portion and ferrule including a shoulder therebetween, said ferrule including a radially outwardly protruding annular ring, said annular ring having an outer surface which is sloped from said ferrule, means to connect said end portion to said housing, a collar, said collar mounted on said shoulder, said collar spaced away from said ferrule, said collar including thread means, clip means, said clip means adapted to fit between said collar and said ferrule and adapted to receive said ferrule therethrough, said clip means including a plurality of discrete radial fingers, at least some of said fingers including a protrusion adjacent said ferrule and overlying said annular ring, interposable on said ferrule between said ferrule and said clip a compression nut, said compression nut including thread means, said compression nut's thread means interactive with said collar's thread means, said compression nut including a sloped inner portion, said non-metallic conduit interposable on said ferrule between said ferrule and said clip means and over said annular ring when said compression nut is in threaded engagement with said collar threads and said sloped inner portion adapted to interactively engage said fingers on said clip means to engage said protrusions on said fingers with said non-metallic conduit proximate said annular ring.

The patent document EP 0863356, published on 9 September 1998, shows a coupling head device for connecting pipes, which comprising a clip socket in the shape of a cylindrical socket, ending in a number of tags that are flexible lengthways, which in turn have a wedge-shaped end. The aforesaid clip socket is held between one end of the connecting element that incorporates this head and an outer screw socket with a tapered end section that decreases in diameter towards the end and is able to push the wedges of the flexible tags of the clip socket inwards, by means of inner teeth that grasp the length of pipe placed inside this coupling.

In the common practice and use of the known devices, after having coupled a first pipe to a second pipe via one of the known devices, when connecting this second pipe to a third pipe, the device of the previous connection tends to become uncoupled, since the rotation of the second pipe for the new connection produces an undesired turn of the locking piece of the previous connection, causing the unlocking of said previous connection.

Therefore, the known devices require improvements that allow simply and economically eliminating the aforementioned drawback.

### DESCRIPTION OF THE INVENTION

The present invention is established and characterised in the independent claim, while the dependent claims describe additional characteristics thereof.

In view of the above, this invention relates to a coupling device for pipes comprising a connector on the outside of which there is a locknut.

A first pipe is coupled to one of the ends of the connector, and on the other end the connector comprises an inner cavity that may be conical or cylindrical, which houses a sealing gasket and a cylindrical locking piece, which are crossed by a second pipe that also remains housed inside the cavity of the connector.

The locking piece in turn comprises a variety of longitudinal slits distributed along the circumference of the locking piece, forming a plurality of flaps, which comprise a truncated cone shaped upper outer edge and a plurality of rows of inner ridges with edges that extend along the inner diameter of the locking piece.

Thus, once the first pipe has been coupled to the connector and the second pipe has been inserted in the inner cavity, through the sealing gasket, the locking piece and the locknut, the latter is screwed on the outside of the connector, thus tightening the sealing gasket between the connector and the locking piece and making the inner edges of the locking piece tightly press on the wall of the second pipe.

Similarly, the locking piece comprises at least one outer longitudinal lug which, once the locking piece has been inserted in the inner cavity, such longitudinal lug penetrates the material of the connector, thus preventing rotation of the locking piece with respect to the connector.

This guarantees the tightness of the seal in the connection, as well as preventing the decoupling of the connection between the first and second pipes, since there is no longer any possibility of undesired turns of the locking piece, which are normally caused by the rotation undergone by the second pipe while it is coupled to a third pipe.

In other words, the longitudinal lug of the locking piece generates a mechanical strength between said locking piece and the inside of the connector that exceeds any possible torque generated by the rotation of the second pipe during its coupling to a third pipe, thus eliminating a possible turning of the locking piece leading to the decoupling of the connection existing between the first and second pipes.

### BRIEF DESCRIPTION OF THE DRAWINGS

This specification is supplemented with a set of drawings illustrating the preferred embodiment, which are never intended to limit the invention.
Figure 1 shows an exploded perspective view of the pipe coupling device.
Figure 2 shows a lateral cross-section of the coupled device of Figure 1.
Figure 3 shows an enlarged detail of Figure 2, which shows a first embodiment of the coupling between the locking piece and the connector.
Figure 4 shows an enlarged detail of Figure 2, which shows a second embodiment of the coupling between the locking piece and the connector, this embodiment not falling within the scope of the present invention.
Figure 5 shows an enlarged detail of Figure 1, which shows a first embodiment of the longitudinal lug.
Figure 6 shows an enlarged detail of Figure 1, which shows a second embodiment of the longitudinal lug.
Figure 7 shows an enlarged detail of Figure 1, which shows a third embodiment of the longitudinal lug.

### DETAILED DESCRIPTION OF THE PREFERRED EMBODIMENT OF THE INVENTION

In view of the above, this invention relates to a pipe coupling device.

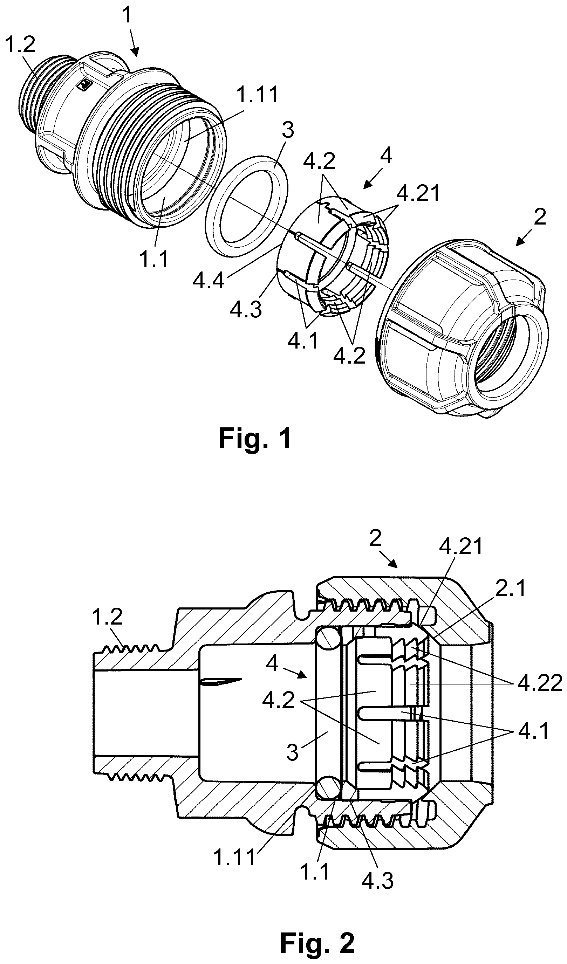

As shown in Figure 1, the device comprises a connector (1) on the outside of which can be screwed a locknut (2). In contrast to the end on which the locknut (2) is screwed, the connector (1) comprises fastening means (1.2), for example a threaded end, for the coupling of a first pipe (not shown in the figures).

On the other hand, on the end on which the locknut (2) is screwed, the connector (1) comprises an inner cavity (1.1), preferably conical in shape, but which may also be cylindrical, that houses a sealing gasket (3) and a cylindrical locking piece (4), as well as the end of a second pipe (not shown in the figures) which is inserted through the sealing gasket (3), the locking piece (4) and the locknut (2).

The locking piece (4) in turn comprises a plurality of longitudinal slits (4.1) distributed along the circumference of the locking piece (4), forming a plurality of flaps (4.2). Said flaps (4.2) comprise a truncated cone shaped upper outer edge (4.21) and a plurality of rows of inner ridges with edges (4.22) distributed throughout the inner diameter of the locking piece (4).

Thus, in Figure 2, when the locknut (2) is screwed on the outside of the connector (1), the upper edges (4.21) of the flaps (4.2) slide on an inner truncated cone-shaped portion (2.1) of the locknut (2), making the inner edges (4.22) of the locking piece (4) sit tightly against the outer wall of the second pipe, as well as tightening the sealing gasket (3) between a rear edge (4.4) of the locking piece (4) and a back (1.11) of the inner cavity (1.1) of the connector (1).

Thus, a watertight connection is made between the first and second pipes, but said connection between said pipes may be subsequently decoupled when trying to connect the second pipe with a third pipe (not shown in the figures). This is because the new connection may cause a turn in the second pipe which also causes an undesired turn of the locking piece (4), thus causing the decoupling of the connection initially made between the first and second pipes.

In order to prevent such drawback, the locking piece (4) comprises at least one outer longitudinal lug (4.3) which, once the locking piece (4) has been inserted into the inner cavity (1.1), restricts the rotation of the locking piece (4) with regard to the connector (1). There is therefore a certain mechanical strength guaranteed between the locking piece (4) and the inside of the connector (1) that prevent transmission of the torque received by said locking piece (4) due to rotation of the second pipe in its coupling with the third pipe, thus preventing the decoupling of the device that connects the first and second pipes. In other words, we allow the second pipe to rotate freely on its axis without transmitting said rotation to be device that connects it to the first pipe thus preventing the decoupling of said device.

The locking piece (4) may even comprise more than one longitudinal lug (4.3), increasing the strength of the coupling between the locking piece (4) and the connector (1) against an undesired rotation of the second pipe.

Preferably, the longitudinal lug (4.3) is arranged between the longitudinal slit (4.1) and the rear edge (4.4) of the locking piece (4).

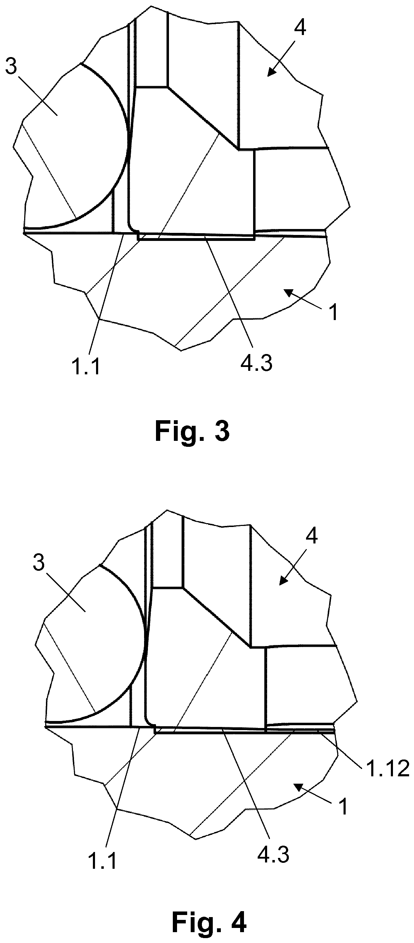

As shown in Figure 3, the insertion of the locking piece (4) inside the cavity (1.1) implies penetration of the longitudinal lug (4.3) into the material of the lateral wall of said cavity (1.1); however, in another embodiment shown in Figure 4, which does not fall within the scope of the present invention, the longitudinal lug (4.3) can be inserted into an inner groove (1.12) of the inner cavity (1.1).

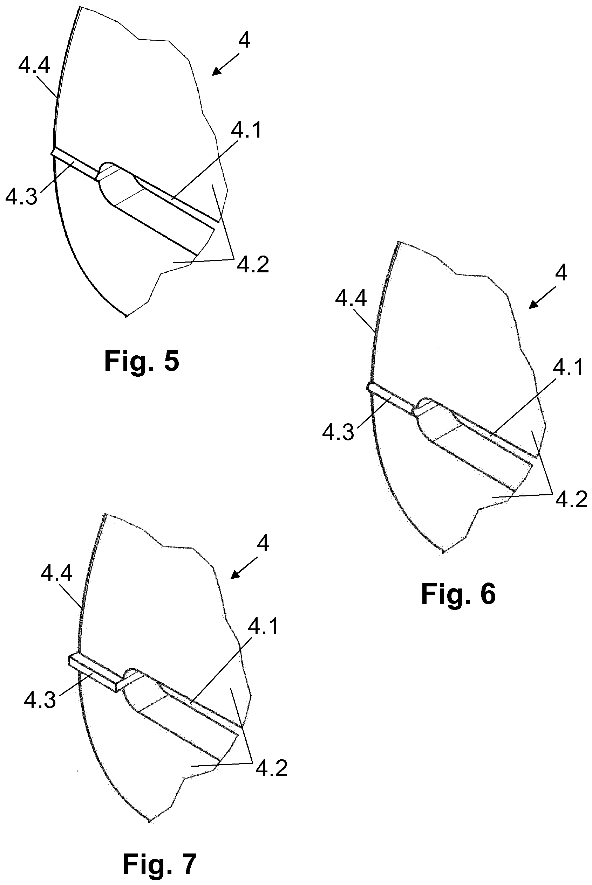

On the other hand, as shown in Figure 5, in a first preferred embodiment, the longitudinal lug (4.3) comprises a triangular cross section. However, the longitudinal lug (4.3) can have a semicircular (embodiment shown in Figure 6) or rectangular cross section (embodiment shown in Figure 7). Particularly, in the latter case, it could be square.

In the event that the inner cavity (1.1) comprises an inner groove (1.12), i.e. in the embodiment not not falling within the scope of the present invention, the cross section of said inner groove (1.12) corresponds to the cross section of the longitudinal lug (4.3).

## Claims

1. A pipe coupling device comprising a connector (1) on the outside of which a locknut (2) is screwed, which connector (1) comprises an inner cavity (1.1) that houses a sealing gasket (3) and a cylindrical locking piece (4), which locking piece (4) comprises a plurality of longitudinal slits (4.1) distributed throughout the circumference of the locking piece (4), forming a plurality of flaps (4.2), which flaps (4.2) comprise a truncated cone shaped upper outer edge (4.21) and a plurality of rows of inner ridges with edges (4.22) that extend along the inner diameter of the locking piece (4), the locking piece (4) comprises at least one outer longitudinal lug (4.3) **characterised in that,** once the locking piece (4) is inserted into the inner cavity (1.1), such longitudinal lug (4.3) penetrates the material of the connector (1) preventing rotation of the locking piece (4) with regard to the connector (1).

2. A device according to Claim 1, wherein the longitudinal lug (4.3) is arranged between the longitudinal slit (4.1) and the rear edge (4.4) of the locking piece (4).

3. A device according to Claims 1 or 2, wherein the longitudinal lug (4.3) comprises a triangular cross section.

4. A device according to Claims 1 or 2, wherein the longitudinal lug (4.3) comprises a semicircular cross section.

5. A device according to Claims 1 or 2, wherein the longitudinal lug (4.3) comprises a rectangular cross section.

6. A device according to Claim 5, wherein the longitudinal lug (4.3) comprises a square cross section.

7. A device according to Claim 1, wherein the upper edges (4.21) of the flaps (4.2) slide into an inner truncated cone-shaped portion (2.1) of the locknut (2) when the locknut (2) is screwed on the outside of the connector (1).

## Patentansprüche

1. Rohrkopplungsvorrichtung mit einem Verbinder (1), auf dessen Außenseite eine Kontermutter (2) aufgeschraubt ist, wobei der Verbinder (1) einen inneren Hohlraum (1.1) aufweist, der eine Dichtung (3) und ein zylindrisches Verriegelungsstück (4) umfasst, wobei das Verriegelungsstück (4) mehrere über den Umfang des Verriegelungsstücks (4) verteilte Längsschlitze (4.1) aufweist, die mehrere Klappen (4.2) bilden, wobei die Klappen (4.2) eine kegelstumpfförmige obere Außenkante (4.21) und mehrere Reihen von Innenstegen mit Kanten (4.22) aufweisen, die sich entlang des Innendurchmessers des Verriegelungsstücks (4) erstrecken, wobei das Verriegelungsstück (4) mindestens eine äußere Längsnase (4.3) aufweist, die **dadurch gekennzeichnet ist, dass,** sobald das Verriegelungsstück (4) in den inneren Hohlraum (1.1) eingeführt ist, eine solche Längsnase (4.3) das Material des Verbinders (1) durchdringt und eine Drehung des Verriegelungsstücks (4) in Bezug auf den Verbinder (1) verhindert.

2. Vorrichtung nach Anspruch 1, wobei die Längsnase (4.3) zwischen dem Längsschlitz (4.1) und der Hinterkante (4.4) des Verriegelungsstücks (4) angeordnet ist.

3. Vorrichtung nach Anspruch 1 oder 2, bei der die Längsnase (4.3) einen dreieckigen Querschnitt aufweist.

4. Vorrichtung nach Anspruch 1 oder 2, bei der die Längsnase (4.3) einen halbkreisförmigen Querschnitt aufweist.

5. Vorrichtung nach Anspruch 1 oder 2, wobei die Längsnase (4.3) einen rechteckigen Querschnitt aufweist.

6. Vorrichtung nach Anspruch 5, wobei die Längsnase (4.3) einen quadratischen Querschnitt aufweist.

7. Vorrichtung nach Anspruch 1, wobei die oberen Kanten (4.21) der Klappen (4.2) in einen inneren kegelstumpfförmigen Abschnitt (2.1) der Kontermutter (2) gleiten, wenn die Kontermutter (2) an der Außenseite des Verbinders (1) angeschraubt ist.

## Revendications

1. Dispositif de raccordement de tuyaux comprenant un raccord (1) sur l'extérieur duquel est vissé un écrou de blocage (2), ledit raccord (1) comprend une cavité intérieure (1.1) dans laquelle sont logés un joint d'étanchéité (3) et une pièce de verrouillage cylindrique (4), ladite pièce de verrouillage (4) comprend une pluralité de fentes longitudinales (4.1) réparties sur toute la circonférence de la pièce de verrouillage (4), formant une pluralité de battants (4.2), lesdits battants (4.2) comprennent un bord extérieur supérieur en forme de cône tronqué (4.21) et une pluralité de rangées d'arêtes intérieures avec des bords (4.22) qui s'étendent sur le diamètre intérieur de la pièce de verrouillage (4), la pièce de verrouillage (4) comprend au moins une oreille longitudinale extérieure (4.3) **caractérisé que,** une fois que la pièce de verrouillage (4) est insérée dans la cavité intérieure (1.1), ladite oreille longitudinale (4,3) pénètre dans le matériau du raccord (1) empêchant la pièce de verrouillage (4) de tourner par rapport au raccord (1).

2. Dispositif selon la revendication 1, l'oreille longitudinale (4.3) étant agencée entre la fente longitudinale (4.1) et le bord arrière (4.4) de la pièce de verrouillage (4).

3. Dispositif selon les revendications 1 ou 2, l'oreille longitudinale (4.3) présentant une section transversale triangulaire.

4. Dispositif selon la revendication 1 ou 2, l'oreille longitudinale (4.3) présentant une section transversale semi-circulaire.

5. Dispositif selon les revendications 1 ou 2, l'oreille longitudinale (4.3) présentant une section transversale rectangulaire.

6. Dispositif selon la revendication 5, l'oreille longitudinale (4.3) comprenant une section transversale carrée.

7. Dispositif selon la revendication 1, les bords supérieurs (4.21) des battants (4.2) coulissant dans une partie intérieure en forme de cône tronqué (2.1) de l'écrou de blocage (2) lorsque l'écrou de blocage (2) est vissé sur l'extérieur du raccord (1).
